# EUROPÄISCHE PATENTSCHRIFT

(11) **EP 3 473 506 B1**
(45) Veröffentlichungstag und Bekanntmachung des Hinweises auf die Patenterteilung: **05.08.2020**
(21) Anmeldenummer: 18200123.0
(22) Anmeldetag: 12.10.2018
(51) Int. Cl.: B60S 9/12

(54) **STÜTZVORRICHTUNG FÜR EIN FAHRZEUG**
CONNECTING DEVICE FOR A VEHICLE
DISPOSITIF SUPPORT POUR UN VÉHICULE

(30) Priorität: 17.10.2017 DE 102017124198
(43) Veröffentlichungstag der Anmeldung: 24.04.2019
(73) Patentinhaber: EWO Fluid Power GmbH, 73277 Owen (DE)
(72) Erfinder: Evesque, Christian, 73275 Ohmden (DE)
(74) Vertreter: Schrooten, Rolf

(56) Entgegenhaltungen:
- DE-A1- 2 843 373
- DE-A1- 4 126 085
- DE-U1- 20 104 087
- US-A- 5 217 209

## Beschreibung

Die vorliegende Erfindung betrifft eine Stützvorrichtung für ein Fahrzeug nach dem Oberbegriff von Anspruch 1. Sie dient zum Abstützen und/oder Anheben und/oder zum Nivellieren eines Fahrzeugs, beispielsweise eines einachsigen Anhängers. Dabei kann ein Stützfuß von einer hochgefahrenen Transportposition in eine heruntergefahrene Abstützposition gebracht werden, indem sein Kopfbereich in einer Führungsbahn verlagert und ein Zwischenbereich des Stützfußes durch eine daran angelenkte Seitenstrebe geführt wird. Im Sinne der vorliegenden Patentanmeldung bedeutet die Anlenkung eines ersten Elements an einem zweiten Element, dass die beiden Elemente gelenkig miteinander verbunden sind, wobei die gelenkige Verbindung unmittelbar oder mittelbar über zwischengefügte Elemente ausgeführt sein kann.

Der Einsatz derartiger Stützvorrichtungen an Wohnwagen ist beispielsweise aus der DE 28 43 373 A1 oder aus der DE 41 26 085 A1 bekannt, wo die Vorrichtungen unterhalb des Wagenbodens, insbesondere auch unterhalb des Chassis des Anhängers montiert sind. DE 41 26 085 A1 offenbart eine Stützvorrichtung gemäß dem Oberbegriff des Anspruchs 1. Mit ihrer Hilfe kann der Wohnwagen nur auf relativ ebenen Campingplätzen sicher abgestellt und nur in Längsrichtung waagerecht ausbalanciert festgesetzt werden. Üblicherweise werden die Stützvorrichtungen über eine drehbar gelagerte Spindel mit darauf gelagerter Spindelmutter manuell mittels einer Handkurbel betrieben, was wenig komfortabel und oft sehr mühsam ist. Zudem können derartige Stützvorrichtungen keine hohen Kräfte übertragen. Eine Hebefunktion ist nur bedingt möglich, da die Bodenstruktur des Anhängers bzw. Wohnwagens nicht dafür ausgelegt ist. Eine Korrektur der Neigung in Querrichtung lässt sich daher nur mit Hilfe des Zugfahrzeuges realisieren und erfordert dabei mühsame Rangierkunst des Fahrers.

Kritisch bei diesen Stützvorrichtungen sind insbesondere auch die Platz-und Einbauverhältnisse. So soll beim Herunterfahren des Stützfußes in die Stützposition eine möglichst große Stützhöhe erreichbar sein, die optimalerweise sogar die Räder des Fahrzeugs vollständig vom Untergrund abhebt, um diese bei längeren Abstellzeiträumen zu entlasten oder beispielsweise auch einen Radwechsel im Falle einer Reifenpanne zu ermöglichen. Gleichzeitig soll bei nach oben in die Transportposition hochgefahrenem Stützfuß eine möglichst kleine Einbauhöhe eingehalten werden, um Beschädigungen während der Fahrt des Fahrzeugs möglichst zu vermeiden.

Es gibt Systeme auf Basis von Teleskopzylindern, die direkt an der Achse des Anhängers angebracht werden. Damit wird die waagerechte Ausbalancierung des Fahrzeugs nach dessen Abkuppeln vom Zugfahrzeug möglich gemacht, da die Achse diese Last übertragen kann. Allerdings benötigt ein solches System mindestens weitere zwei Scheren-Stützen, in der Regel vier Stück in ausreichender Entfernung von der Mittelachse des Anhängers, um die waagerechte Ausrichtung des Anhängers in Längsrichtung zu gewährleisten.

Der Einsatz von Teleskopzylindern (mehrstufige Hydraulikzylinder) in ausreichender Entfernung zu der Mittelachse des Anhängers scheitert daran, dass ein Teleskopzylinder eine zu große Bauhöhe erfordern würde, um die benötigte Hubhöhe zu generieren. Beim Fahren des Anhängers müsste der Teleskopzylinder dann in eine Transportposition hochgeklappt werden, was mit sehr hohen Kosten verbunden wäre.

Zudem muss bei jeder Art von Anhänger, insbesondere bei Wohnwagen, die Problematik der zulässigen Nutzlast besonders beachtet werden. Ob bei konventionellen Stützsystemen oder bei der Verwendung von Teleskopzylindern, die Last wird in der Tat auf sieben Punkten verteilt gestützt. Diese hohe Anzahl an Abstützpunkten verursacht ein hohes Gewicht, das von der zur Verfügung stehenden und oftmals nur geringen Nutzlast abgezogen werden muss

Aufgabe der vorliegenden Erfindung ist es daher, eine konstruktiv einfache Stützvorrichtung der eingangs genannten Art zu schaffen, die den vorgenannten Anforderungen in optimaler Weise gerecht wird. Insbesondere soll die Vorrichtung auch leicht handhabbar sein und somit einen hohen Komfort bei der Benutzung bieten.

Diese Aufgabe wird erfindungsgemäß durch eine Stützvorrichtung nach Anspruch 1 gelöst. Vorteilhafte Ausgestaltungen und Weiterbildungen der Erfindung ergeben sich aus den abhängigen Ansprüchen.

Wesentlich bei der erfindungsgemäßen Lösung ist es, dass der zweite Punkt der Führungsbahn, den der Kopfbereich des Stützfußes einnimmt, wenn der Stützfuß sich in der nach unten heruntergefahrenen Stützposition befindet, unterhalb des ersten Punktes der Führungsbahn liegt, welchen der Kopfbereich des Stützfußes einnimmt, wenn der Stützfuß sich in der nach oben hochgefahrenen Transportposition befindet.

In vorteilhafter Weise befindet sich der tiefer liegende zweite Punkt der Führungsbahn dabei näher an dem feststehenden Anlenkpunkt der mindestens einen Seitenstrebe als der höher und somit näher am Fahrzeugboden liegende erste Punkt der Führungsbahn.

Der Hauptvorteil liegt dabei darin, dass durch diese Art der Anordnung der Führungsbahn nicht nur eine besonders große Abstützhöhe beim in die Stützposition heruntergefahrenen Stützfuß, sondern auch eine minimale Bauhöhe der Stützvorrichtung erreichbar ist, wenn der Stützfuß in die Transportposition hochgefahren ist.

Darüber hinaus erlaubt die erfindungsgemäße Anordnung der Führungsbahn beim Ausfahren des Stützfußes auch eine zumindest nahezu exakt senkrechte Absetzbewegung des unteren Aufsetzbereichs, was insbesondere im Hinblick auf eine frei von seitlichen Verschiebungen und somit besonders einfache und exakte Ausrichtung des Fahrzeugs von großem Vorteil ist.

Die erfindungsgemäße Stützvorrichtung ist bei einfacher Konstruktion kostengünstig herzustellen und sie kann leicht auch nachträglich unter einem Fahrzeug, insbesondere unter einem Anhänger montiert werden.

Besonders vorteilhaft ist es, wenn die Führungsbahn geradlinig mit einer zum zweiten Punkt hin abfallenden Neigung ausgebildet ist. Hierdurch ergibt sich eine konstruktiv und fertigungstechnisch besonders einfache Ausführungsform.

Alternativ dazu kann die Führungsbahn aber auch mindestens einen gekrümmt verlaufenden Kurvenabschnitt aufweisen. Insbesondere können sich auch mehrere Abschnitte mit verschiedenen Krümmungsradien und/oder Krümmungsrichtungen unmittelbar oder mittelbar aneinander anschließen. Auf diese Weise kann die Stützvorrichtung besonders gut an spezielle Anforderungen eines bestimmten Abstützverhaltens angepasst werden.

Eine besonders komfortable Bedienung der Stützvorrichtung kann dadurch erreicht werden, dass sie einen Hydraulikzylinder umfasst, der starr oder schwenkbar an der Konsole befestigt ist, wobei das freie Ende der mit dem Kolben verbundenen Kolbenstange an dem Kopfbereich des Stützfußes angelenkt ist. Vorzugsweise ist der Hydraulikzylinder dabei im Sinne einer einfachen und kostengünstigen Ausführungsform einstufig und/oder im Sinne eines besonders hohen Bedienungskomforts doppeltwirkend ausgeführt. Der Stützfuß kann hierdurch besonders komfortabel hydraulisch betätigt werden, um hoch oder runter zu fahren. Vorteilhafterweise ist dabei kolbenseitig ein Sicherheitsventil vorgesehen, bzw. bei einem doppeltwirkenden Zylinder können kolbenseitig zwei Sicherheitsventile vorgesehen werden, um im Falle eines hydraulischen Druckverlustes einerseits die Stützvorrichtung in der heruntergefahrenen Stützposition gegen ungewolltes Absenken des Fahrzeugs zu sichern und andererseits um in der hochgefahrenen Transportposition ein ungewolltes Herabfahren des Stützfußes während der Fahrt zu vermeiden.

Besonders vorteilhaft ist es ferner, wenn der Aufsetzbereich in an sich bekannter Weise durch einen vorzugsweise kugelgelenkig mit dem Stützfuß verbundenen Stützteller gebildet ist.

Vorzugsweise ist der Anlenkpunkt der mindestens eine Seitenstrebe an einer separaten Nebenkonsole angeordnet, die ebenfalls unter dem Fahrzeugboden befestigt wird. Alternativ dazu kann der Anlenkpunkt aber auch an der Konsole angeordnet sein, welche die Führungsbahn enthält. Dabei liegt der Anlenkpunkt vorzugsweise nicht in der Flucht der Führungsbahn, sondern vorteilhafterweise oberhalb dieser Linie.

Gemäß einer besonders bevorzugten Ausführungsform der Erfindung ist vorgesehen, dass die Stützvorrichtung im hinteren Bereich des Anhängers zwei Stützfüße aufweist, die jeweils eine eigene Führungsbahn haben. Vorteilhafterweise können beide Führungsbahnen in einer gemeinsamen Hauptkonsole angeordnet sein, wobei die beiden Stützfüße vorzugsweise symmetrisch zueinander angeordnet und hoch bzw. runter verstellbar sind. Alternativ kann auch ein längenanpassbares Zwischenteil zwischen zwei separaten Konsolen der beiden Stützfüße angeordnet sein, um die doppelseitige Stützvorrichtung an die Breite des Fahrzeugs anpassen zu können, welches mit der Stützvorrichtung ausgestattet wird. Diese Eigenschaft dient insbesondere auch dazu, den Kraftverlauf auf das Chassis des Anhängers zu übertragen und somit für Stabilität und Sicherheit der Abstützung zu sorgen.

Dabei ist es im Hinblick auf eine minimale Einbauhöhe der Stützvorrichtung besonders vorteilhaft, wenn die gemeinsame Hauptkonsole parallel zu einer Radachse des Fahrzeugs zwischen den Trägern des Chassis unter dem Boden des Fahrzeugs befestigt wird.

Gegenstand der vorliegenden Erfindung ist ferner ein Fahrzeug, insbesondere ein Anhänger, das bzw. der insgesamt genau drei Stützfüße gemäß einer Stützvorrichtung der vorangehend beschriebenen Art aufweist. Da bei einer derartigen Dreipunktabstützung mit der Längsneigung und der Querneigung des Fahrzeugs nur zwei voneinander unabhängige Neigungsrichtungen zu berücksichtigen sind, kann die Nivellierung besonders einfach gesteuert werden. Gleichzeitig kann so eine besonders stabile Abstützung des Fahrzeugs erzielt werden, bei der unabhängig von der Art und Ausrichtung des Untergrunds stets alle Aufsetzbereiche bzw. Stützteller der drei Stützfüße satt auf dem Untergrund aufliegen.

Besonders vorteilhaft ist es bei einem Anhänger, insbesondere bei einem Wohnwagen, wenn zwei Stützfüße im hinteren Bereich beidseitig an gleicher Längsposition des Anhängers angeordnet sind, wobei der Aufsetzbereich des vorderen Stützfußes durch ein an dem Stützfuß angelenktes Abstützrad gebildet ist. Auf diese Weise kann die vordere Stützvorrichtung auch zu einem besonders einfach ausführbaren Abkuppeln und Rangieren des Anhängers beitragen.

Diese Drei-Punkt-Kombination ermöglicht zudem das einfache, schnelle und stabile Abstützen und Nivellieren des Fahrzeuges, insbesondere wenn der Boden starke Unebenheiten aufweist. Die Reduzierung der benötigte Anzahl der Stützpunkte von sieben bei den bisher eingesetzten Systemen auf ein Minimum von drei Stützen ermöglicht zudem eine erhebliche Gewichtsersparnis bzw. einen entsprechend wertvollen Nutzlastgewinn.

Bei einer besonders vorteilhaften Gestaltung dieser erfindungsgemäßen Ausführungsform wird der dritte Stützfuß mit seiner Konsole im Bereich der vorderen Deichsel in der Längsrichtung des Anhängers angeordnet und ersetzt das bekannte Stützrad. Dabei werden sämtliche Kraft- und Führungselemente wie Zylinder, Führungsschienen und Befestigungsmittel in den drei Stützen jeweils in gleicher Bauform verbaut, um die Anzahl an identischen Bauteilen zu erhöhen und die Herstellungskosten zu senken.

Die gewählte konsolenartige Ausgestaltung der jeweiligen Stützen bietet den weiteren Vorteil, dass jede Konsole nicht notwendigerweise mit dem Fahrzeugrahmen verschraubt werden muss, sondern vorzugsweise durch Klemmung an dem Chassis dieses Fahrzeugs befestigt wird. Dadurch kann ein Nachrüsten ohne Gewährleistungseinbußen erfolgen.

Weitere Vorteile und Merkmale der Erfindung ergeben sich aus der nachfolgenden Beschreibung und den in den Zeichnungen dargestellten Ausführungsbeispielen.

Es zeigen:
- Figur 1:: eine erste Ausführungsform einer erfindungsgemäßen Stützvorrichtung, bei der der Stützfuß in die Transportposition hochgefahren ist,
- Figur 2:: die Stützvorrichtung aus Figur 1, bei der sich der Stützfuß in einer Zwischenposition befindet,
- Figur 3:: eine Anordnung mit zwei nebeneinander angeordneten Stützvorrichtungen gemäß Figur 1, bei der beide Stützfüße in die Abstützposition heruntergefahren sind.
- Figur 4:: eine zweite Ausführungsform einer erfindungsgemäßen Stützvorrichtung mit angelenktem Stützrad, das in die Abstützposition heruntergefahren ist,
- Figur 5:: die Stützvorrichtung aus Figur 4 in der hochgefahrenen Transportposition,
- Figur 6:: vergrößerte Teilansicht aus Figur 4 mit blockiertem Stützrad, und
- Figur 7:: vergrößerte Teilansicht aus Figur 4 mit freigegebenem Stützrad.

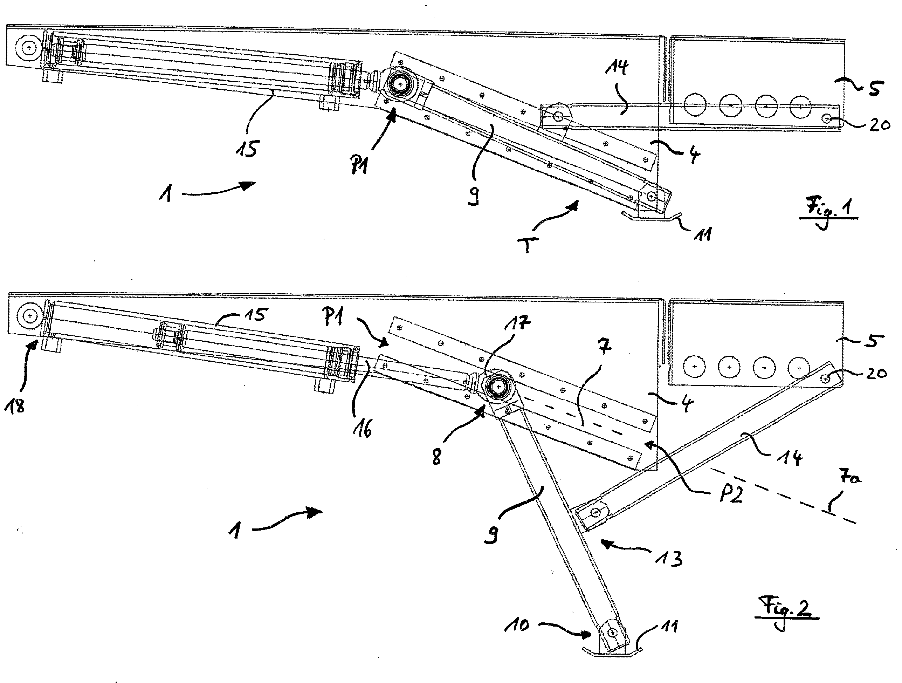

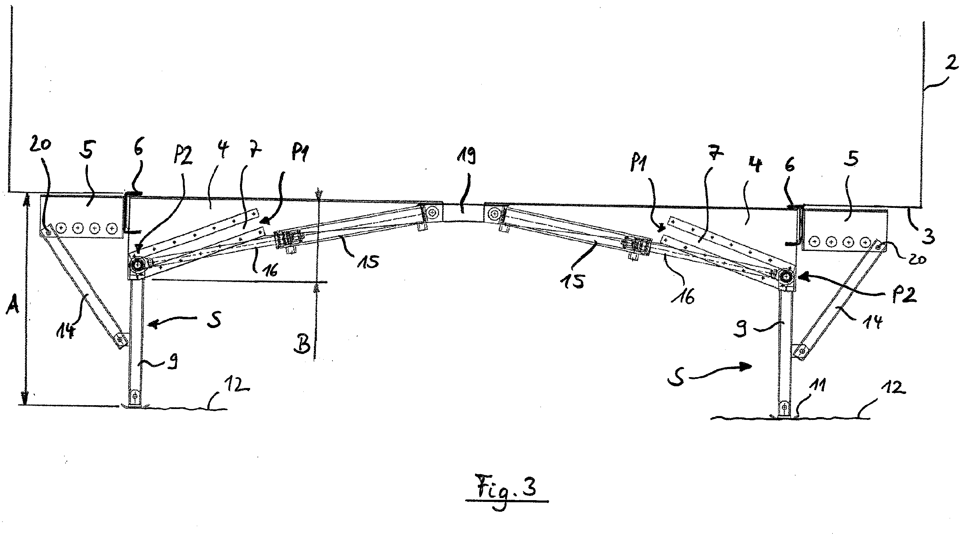

Die in Figur 1 dargestellte Stützvorrichtung 1 wird unter dem Boden 2 eines hier nur angedeuteten Wohnwagens 3 befestigt. Sie umfasst eine größere Konsole 4 und eine Nebenkonsole 5, die nebeneinander liegend an den beiden Seiten eines Hauptchassisträgers 6 (Figur 3) montiert werden. An der Konsole 4 ist eine hier geradlinig ausgeführte und geneigt angeordnete Führungsbahn 7 vorgesehen, in der ein oberer Kopfbereich 8 eines Stützfußes 9 verschiebbar geführt ist. Die Führungsbahn 7 umfasst dazu zwei in einem Abstand parallel zueinander angeordnete Führungsleisten, zwischen denen ein am oberen Kopfbereich 8 des Stützfußes 9 seitlich vorstehender Führungsbolzen eingreift. Vorteilhafterweise ist der Führungsbolzen dabei mit einer reibungsreduzierende Beschichtung versehen oder er kann ein oder zwei Lager, insbesondere Wälzlager tragen, die mit den Führungsleisten zusammenwirken.

An seinem unteren Ende weist der Stützfuß 9 einen Aufsetzbereich 10 mit einem schwenkbar daran angelenkten Stützteller 11 auf, der beim Herunterfahren des Stützfußes 9 auf einen Untergrund 12 aufsetzt um den Wohnwagen 3 abzustützen. Die schwenkbare Lagerung des Stütztellers 11 an dem Aufsetzbereich 10 des Stützfußes 9 erlaubt eine gute Anpassung an gegebenenfalls vorhandene Unebenheiten oder lokale Neigungen des Untergrunds 12 und somit eine stabile Abstützung des Wohnwagens 3. Zwischen dem Kopfbereich 8 und dem Aufsetzbereich 10 befindet sich ein Zwischenbereich 13, an dem ein erstes Ende einer Seitenstrebe 14 schwenkbar an dem Stützfuß 9 angelenkt ist. Das zweite Ende der Seitenstrebe 14 ist in einem Anlenkpunkt 20 schwenkbar an der Nebenkonsole 5 angelenkt. Dabei liegt der Anlenkpunkt 20 nicht in der Flucht 7a der Führungsbahn 7, sondern oberhalb dieser Linie 7a.

Zum Verstellen des Stützfußes 9 von der in Figur 1 gezeigten nach oben hochgefahrenen Transportposition T in die in Figur 3 dargestellte nach unten heruntergefahrene Stützposition S ist ein einstufiger doppeltwirkender Hydraulikzylinder 15 angeordnet, dessen Kolbenstange 16 mit ihrem am freien Ende ausgebildeten Stangenauge 17 schwenkbar an dem in der Führungsbahn 7 verschiebbaren Kopfbereich 8 des Stützfußes 9 angelenkt ist. Der von der Kolbenstange 16 abgewandte Bodenbereich 18 des Hydraulikzylinders 15 ist schwenkbar an der Konsole 4 befestigt.

Der Hydraulikzylinder 15 ist hydraulisch mit einem hier nicht dargestellten Hydraulikaggregat verbunden. Das vorteilhafterweise reversierbar ausgeführte Hydraulikaggregat wird von einem Elektromotor angetrieben, so dass der Stützfuß 9 je nach Drehrichtung des Elektromotors in die Stützposition S heruntergefahren oder in die Transportposition T hochgefahren werden kann. Der Elektromotor ist vorzugsweise elektrisch mit einer Steuereinheit verbunden, durch die das Hydraulikaggregat und somit auch der Stützfuß computergesteuert betätigt werden kann.

Im Bereich des dem Hydraulikzylinder 15 zugewandten Endes der Führungsbahn 7 liegt ein erster Punkt P1, in dem sich der Kopfbereich 8 des Stützfußes 9 befindet, wenn der Stützfuß 9 nach oben in die Transportposition T hochgefahren ist. Im Bereich des der Seitenstrebe 14 und der Nebenkonsole 5 zugewandten anderen Endes der Führungsbahn 7 liegt ein zweiter Punkt P2, in dem sich der Kopfbereich 8 des Stützfußes 9 dann befindet, wenn der Stützfuß 9 nach unten in die Stützposition S heruntergefahren ist. Erfindungsgemäß liegt der erste Punkt P1 höher als der zweite Punkt P2, so dass die Führungsbahn 7 in Richtung zu der Nebenkonsole 5 hin schräg nach unten abfällt (d.h. in der Darstellung von Figur 1 schräg nach rechts unten). Dadurch kann in der Stützposition S zwischen dem Untergrund 12 und der Unterseite des Bodens 2 des Wohnwagens 3 beispielsweise eine Abstützhöhe A von mehr als 500 mm erzielt werden, während die Stützvorrichtung 1 mit hochgefahrenem Stützfuß 9 lediglich eine Bauhöhe B von beispielsweise 200 mm beansprucht.

Wie in dem Querschnitt von Figur 3 zu erkennen ist, sind zwei Stützfüße 9 an beiden Seiten des Wohnwagens 3 symmetrisch zueinander angeordnet. Jeder Stützfuß 9 hat eine eigene Konsole 4 mit jeweils einer darin ausgebildeten eigenen Führungsbahn 7. Zwischen den beiden Konsolen 4 befindet sich ein Verbindungszwischenteil 19, um die Gesamtkonstruktion der Stützvorrichtung 1 an die Breite zwischen den beiden in Längsrichtung des Wohnwagens 3 verlaufenden Hauptchassisträgern 6 des Wohnwagens 3 anzupassen. Beide Konsolen 4 erstrecken sich dabei parallel zu der Radachse des Wohnwagens 3. Alternativ zu einer Verschraubung oder Verschweißung können die beiden Konsolen 4 mit dem Verbindungszwischenteil 19 zwischen den Längsträgern des Hauptchassisträgers 6 fest verklemmt werden, was eine besonders einfach ausführbare Nachrüstung erlaubt.

Beide Stützfüße 9 sind hier durch jeweils einen eigenen Hydraulikzylinder 15 betätigbar, was über eine gemeinsame Steuereinheit computergesteuert erfolgen kann. Alternativ könnten auch beide Stützfüße 9 über eine geeignete Mechanik von nur einem gemeinsamen Hydraulikzylinder 15 betätigt werden.

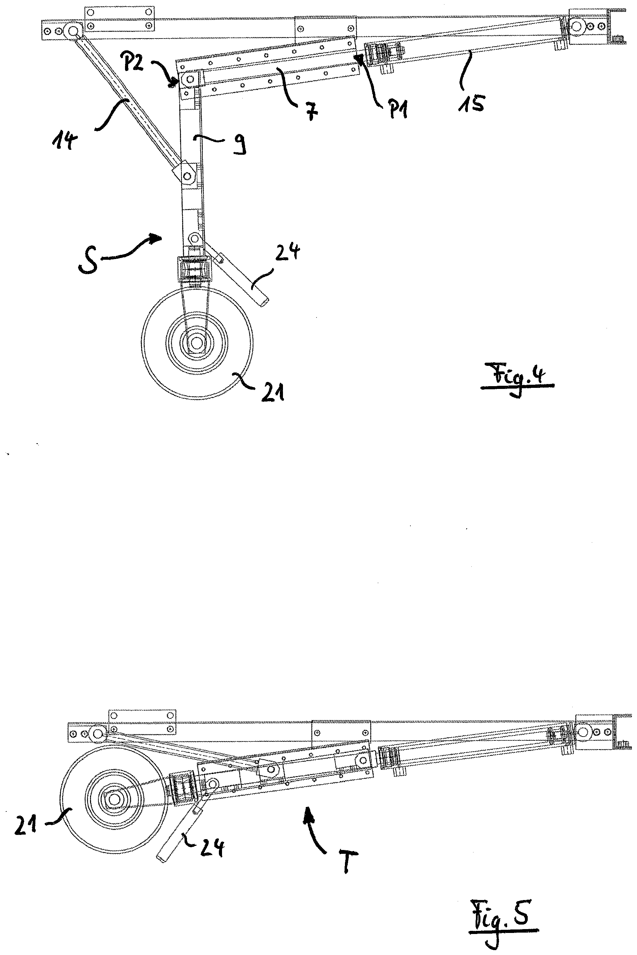

Bei dem in Figur 4 in der heruntergefahrenen Abstützposition dargestellten Ausführungsbeispiel einer Stützvorrichtung 1 ist der dritte Stützfuß 9 mit einem angelenkten Stützrad 21 ausgeführt. Dabei wird anstelle des herkömmlichen mechanischen Stützrades vorteilhafterweise eine erfindungsgemäße Stützvorrichtung 1 angebracht, bei der der Stützteller durch eine Drehvorrichtung 22 mit angebautem Rad 21 ersetzt wird. Die gelagerte Drehvorrichtung 22 übernimmt dabei zwei wichtige Funktionen:
a) Rangieren des Fahrzeuges durch freie und verschleißarme Orientierung des Stützrades 21, und
b) Stabilisierung des Wohnwagens um seine vertikale Achse durch Blockieren des Stützrades 21 mittels einer Feststelleinrichtung 23-24. Dabei kann die vordere und dritte Stütze die eigentliche Bremswirkung der Haupträder vom Fahrzeug übernehmen, falls diese keinen Bodenkontakt haben sollten.

Figur 5 zeigt die die Stützvorrichtung 1 mit dem Stützrad 21 in der hochgefahrenen Transportposition.

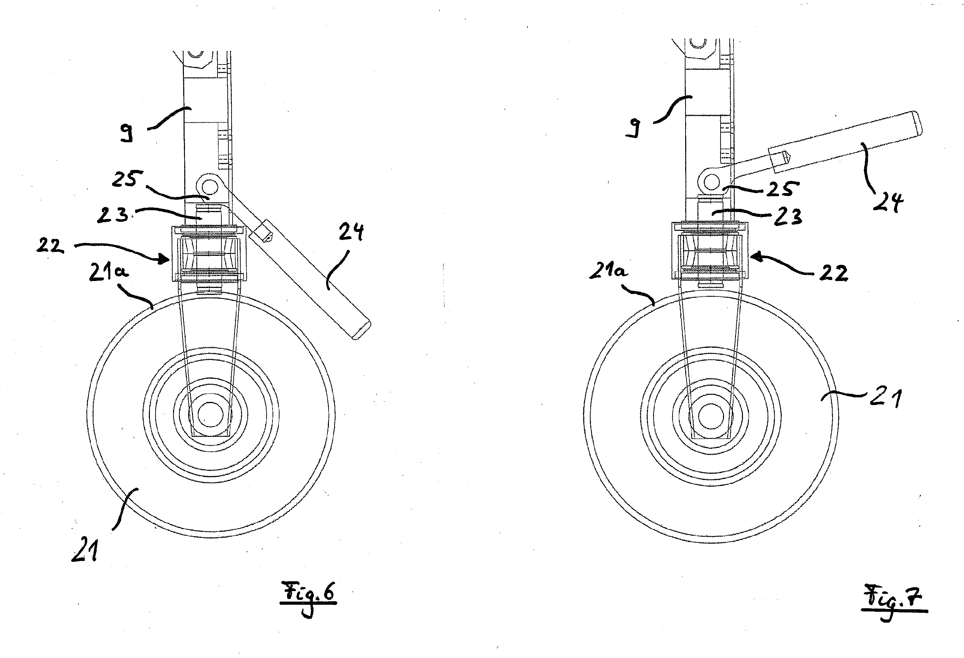

Die erfindungsgemäße Gestaltung der gelagerten Drehvorrichtung 22 dieser dritten Stütze ist so konzipiert, dass ein verschiebbarer Lagerbolzen 23 vorgesehen ist, der durch die Betätigung eines Feststellhebels 24 mit nach unten in den Gummimantel 21a des Stützrades 21 gepresst wird und so dessen Rotation formfest blockiert (Figur 6). Dazu weist der Feststellhebel 24 einen exzentrischen Auflagebereich 25 auf, der auf das obere Ende des Lagerbolzens 23 einwirkt.

Zum Lösen dieser Blockierung wird der Lagerbolzen 23 durch Entsperren des manuellen Feststellhebels 24 und eine auf ihn wirkende Rückstellkraft eines elastischen Federelements in seine obere Position zurückversetzt und entfernt sich dabei ausreichend weit vom Stützradumfang, so dass das Stützrad 21 wieder frei rotieren kann (Figur 7).

## Patentansprüche

1. Stützvorrichtung (1) für ein Fahrzeug, insbesondere für einen Anhänger, umfassend einen Stützfuß (9) mit einem auf einem Untergrund (12) aufsetzbaren Aufsetzbereich (10) und eine unter dem Boden (2) oder Chassis (6) eines Fahrzeugs befestigbare Konsole (4) mit einer Führungsbahn (7), in der ein Kopfbereich (8) des Stützfußes (9) zwischen einem ersten Punkt (P1), in dem der Stützfuß (9) sich in einer nach oben hochgefahrenen Transportposition (T) befindet, und einen zweiten Punkt (P2), in dem der Stützfuß (9) sich in einer nach unten heruntergefahrenen Stützposition (S) befindet, verschiebbar geführt ist, wobei mindestens eine Seitenstrebe (14) einerseits an einem zwischen dem Aufsetzbereich (10) und dem Kopfbereich (8) liegenden Zwischenbereich (13) des Stützfußes (9) und andererseits an einen relativ zu der Führungsbahn (7) feststehenden Anlenkpunkt (20) jeweils schwenkbar angelenkt ist,
**dadurch gekennzeichnet,**
**dass** der zweite Punkt (P2) der Führungsbahn (7) unterhalb des ersten Punktes (P1) der Führungsbahn (7) liegt.

2. Stützvorrichtung (1) nach Anspruch 1, **dadurch gekennzeichnet, dass** die Führungsbahn (7) geradlinig mit einer zum zweiten Punkt (P2) hin abfallenden Neigung ausgebildet ist.

3. Stützvorrichtung (1) nach Anspruch 1, **dadurch gekennzeichnet, dass** die Führungsbahn (7) mindestens einen gekrümmt verlaufenden Kurvenabschnitt aufweist.

4. Stützvorrichtung (1) nach einem der vorherigen Ansprüche, **dadurch gekennzeichnet, dass** sie einen insbesondere einstufigen und vorzugsweise doppeltwirkenden Hydraulikzylinder (15) umfasst, der an der Konsole (4) befestigt oder angelenkt ist, wobei die mit dem Kolben verbundene Kolbenstange (16) an dem Kopfbereich (8) des Stützfußes (9) angelenkt ist.

5. Stützvorrichtung (1) nach einem der vorherigen Ansprüche, **dadurch gekennzeichnet, dass** der Aufsetzbereich (10) durch einen beweglich an dem Stützfuß (9) angelenkten Stützteller (11) gebildet ist.

6. Stützvorrichtung (1) nach einem der vorherigen Ansprüche, **dadurch gekennzeichnet, dass** der Anlenkpunkt (20) der mindestens einen Seitenstrebe (14) an der die Führungsbahn (7) enthaltenden Konsole (4) oder an einer separaten Nebenkonsole (5) angeordnet ist.

7. Stützvorrichtung (1) nach einem der vorherigen Ansprüche, **dadurch gekennzeichnet, dass** der Anlenkpunkt (20) der mindestens einen Seitenstrebe (14) außerhalb der Flucht (7a) der Führungsbahn (7), vorzugsweise oberhalb der Flucht (7a) der Führungsbahn (7) liegt.

8. Stützvorrichtung (1) nach einem der vorherigen Ansprüche, **dadurch gekennzeichnet, dass** sie zwei Stützfüße (9) mit jeweils einer eigenen Führungsbahn (7) umfasst, wobei beide Führungsbahnen (7) in einer gemeinsamen Hauptkonsole angeordnet sind.

9. Stützvorrichtung (1) nach Anspruch 8, **dadurch gekennzeichnet, dass** die Hauptkonsole parallel zu einer Radachse des Fahrzeugs (3) zwischen den Trägern des Chassis (6) unter dem Boden (2) des Fahrzeugs (3) befestigbar ist.

10. Fahrzeug, insbesondere Anhänger, **dadurch gekennzeichnet, dass** es insgesamt genau drei Stützfüße (9) einer Stützvorrichtung (1) nach einem der vorherigen Ansprüche aufweist.

11. Anhänger, insbesondere Wohnwagen, nach Anspruch 10, **dadurch gekennzeichnet, dass** der Aufsetzbereich (10) eines vorderen Stützfußes (9) durch ein an dem Stützfuß (9) angelenktes Abstützrad (21) gebildet ist, wobei vorzugsweise das Abstützrad (21) mittels eines Lagers (26) um die Längsachse des Stützfußes (9) drehbar gelagert ist.

12. Anhänger, insbesondere Wohnwagen, nach Anspruch 11, **dadurch gekennzeichnet, dass** das Abstützrad (21) mittels eines axial verschiebbaren und durch eine lösbare Feststelleinrichtung (24) in einer Sperrposition feststellbaren Lagerbolzens (23) blockierbar ist.

13. Anhänger, insbesondere Wohnwagen, nach Anspruch 12, **dadurch gekennzeichnet, dass** ein elastisches Federelement auf den Lagerbolzen (23) einwirkt, durch das der Lagerbolzen (23) bei gelöster Feststelleinrichtung (24) aus der das Abstützrad (21) blockierenden Sperrposition herausbewegbar ist.

## Claims

1. Support device (1) for a vehicle, particularly for a trailer, comprising a support leg (9) with a standing region (10) which can be positioned on a subsurface (12) and a panel (4) which can be fastened below the floor (2) or chassis (6) of a vehicle, with a guideway (7) in which a head area (8) of the support leg (9) is guided displaceably between a first point (P1), in which the support leg (9) is in a raised, transporting position (T), and a second point (P2), in which the support leg (9) is in a lowered, supporting position (S), wherein each of at least one lateral struts (14) is articulated so as to be pivotable at one end on an intermediate area (13) of the support leg (9) located between the standing region (10) and the head area (8), and at the other end on an articulation point (20) which is in a fixed position relative to the guideway (7),
**characterized in that**
the second point (P2) of the guideway (7) is positioned lower than the first point (P1) of the guideway (7).

2. Support device (1) according to Claim 1, **characterized in that** the guideway (7) is constructed linearly with a slope descending towards the second point (P2).

3. Support device (1) according to Claim 1, **characterized in that** the guideway (7) includes at least one curved section which extends nonlinearly.

4. Support device (1) according to any one of the preceding claims, **characterized in that** it comprises an in particular single-stage and preferably double-acting hydraulic cylinder (15) which is fastened or attached in articulated manner to the panel (4), wherein the piston rod (16) connected to the piston is attached in articulated manner to the head area (8) of the support leg (9).

5. Support device (1) according to any one of the preceding claims, **characterized in that** the standing region (10) is formed by a support plate (11) which is attached in articulated manner so as to be movable on the support leg (9).

6. Support device (1) according to any one of the preceding claims, **characterized in that** the articulation point (20) of the at least one lateral strut (14) is disposed on the panel (4) which contains the guideway (7) or on a separate, auxiliary panel (5).

7. Support device (1) according to any one of the preceding claims, **characterized in that** the articulation point (20) of the at least one lateral strut (14) is located outside of the alignment (7a) of the guideway (7), preferably above the alignment (7a) of the guideway (7).

8. Support device (1) according to any one of the preceding claims, **characterized in that** it comprises two support legs (9), each of which includes its own guideway (7), wherein both guideways (7) are disposed in a shared main panel.

9. Support device (1) according to Claim 8, **characterized in that** the main panel can be fastened to a wheel axle of the vehicle (3) between the bearing elements of the chassis (6) below the floor (2) of the vehicle (3).

10. Vehicle, in particular a trailer, **characterized in that** it has a total of exactly three support legs (9) of a support device (1) according to any one of the preceding claims.

11. Trailer, in particular a caravan, according to Claim 10, **characterized in that** the standing region (10) of a front support leg (9) formed by a support wheel (21) which is attached in articulated manner to the support leg (9), wherein the support wheel (21) is preferably mounted by means of a bearing (26) so as to be rotatable about the longitudinal axis of the support leg (9).

12. Trailer, in particular a caravan, according to Claim 11, **characterized in that** the support wheel (21) can be immobilised by means of a bearing bolt (23) which is axially displaceable and can be locked in a blocking position by means of a releasable locking device (24).

13. Trailer, in particular a caravan, according to Claim 12, **characterized in that** a resilient spring element acts on the bearing bolt (23), thereby enabling the bearing bolt (23) to be moved out of the locking position blocking the support wheel (21) when the locking device (24) is released.

## Revendications

1. Dispositif d'appui (1) pour un véhicule, notamment pour une remorque, comprenant un pied d'appui (9) pourvu d'une zone de pose (10) susceptible d'être posée sur un sol (12) et d'une console (4) susceptible d'être fixée sous le fond inférieur (2) ou le châssis (6) d'un véhicule, pourvue d'une voie de guidage (7), dans laquelle une zone haute (8) du pied d'appui (9) est guidée de manière déplaçable entre un premier point (P1), sur lequel le pied d'appui (9) se trouve dans une position de transport (T) remontée vers le haut, et un deuxième point (P2), sur lequel le pied d'appui (9) se trouve dans une position d'appui (S) descendue vers le bas, au moins une jambe de force latérale (14) étant respectivement articulée de manière à pouvoir pivoter d'une part sur une zone intermédiaire (13) du pied d'appui (9) située entre la zone de pose (10) et la zone haute (8) et d'autre part sur un point d'articulation (20) stationnaire par rapport à la voie de guidage (7),
**caractérisé en ce que**
le deuxième point (P2) de la voie de guidage (7) se situe en dessous du premier point (P1) de la voie de guidage (7).

2. Dispositif d'appui (1) selon la revendication 1, **caractérisé en ce que** la voie de guidage (7) est conçue sous forme rectiligne, avec une inclinaison décroissant vers le deuxième point (P2).

3. Dispositif d'appui (1) selon la revendication 1, **caractérisé en ce que** la voie de guidage (7) comporte au moins un segment incurvé s'étendant sous forme courbe.

4. Dispositif d'appui (1) selon l'une quelconque des revendications précédentes, **caractérisé en ce qu'**il comprend un vérin hydraulique (15) notamment à un seul étage et de préférence à double action, qui est fixé ou articulé sur la console (4), la tige de piston (16) reliée avec le piston étant articulée sur la zone haute (8) du pied d'appui (9).

5. Dispositif d'appui (1) selon l'une quelconque des revendications précédentes, **caractérisé en ce que** la zone de pose (10) est formée d'un plateau d'appui (11) articulé de manière mobile sur le pied d'appui (9).

6. Dispositif d'appui (1) selon l'une quelconque des revendications précédentes, **caractérisé en ce que** le point d'articulation (20) de l'au moins une jambe de force latérale (14) est placé sur la console (4) comprenant la voie de guidage (7) ou sur une console auxiliaire (5) séparée.

7. Dispositif d'appui (1) selon l'une quelconque des revendications précédentes, **caractérisé en ce que** le point d'articulation (20) de l'au moins une jambe de force latérale (14) se situe à l'extérieur de la fuite (7a) de la voie de guidage (7), de préférence au-dessus de la fuite (7a) de la voie de guidage (7).

8. Dispositif d'appui (1) selon l'une quelconque des revendications précédentes, **caractérisé en ce qu'**il comprend deux pieds d'appui (9) pourvus chacun d'une propre voie de guidage (7), les deux voies de guidage (7) étant placées dans une console principale commune.

9. Dispositif d'appui (1) selon la revendication 8, **caractérisé en ce que** la console principale est susceptible d'être fixée à la parallèle d'un essieu de roue du véhicule (3), entre les supports du châssis (6), sous le fond inférieur (2) du véhicule (3).

10. Véhicule, notamment remorque, **caractérisé en ce qu'**il comporte au total, précisément trois pieds d'appui (9) d'un dispositif d'appui (1) selon l'une quelconque des revendications précédentes.

11. Remorque, notamment caravane selon la revendication 10, **caractérisée en ce que** la zone de pose (10) d'un pied d'appui (9) avant est formée d'une roue d'appui (21) articulée sur le pied d'appui (9), de préférence la roue d'appui (21) étant logée au moyen d'un palier (26) de manière rotative autour de l'axe longitudinal du pied d'appui (9).

12. Remorque, notamment caravane selon la revendication 11, **caractérisée en ce que** la roue d'appui (21) est susceptible d'être bloquée au moyen d'un axe de palier (23) déplaçable en direction axiale et susceptible d'être bloqué par un système de blocage (24) relâchable dans une position verrouillée.

13. Remorque, notamment caravane, selon la revendication 12, **caractérisée en ce qu'**un élément à ressort élastique par lequel, lorsque le système de blocage (24) est relâché, l'axe de palier (23) est susceptible d'être déplacé hors de la position verrouillée bloquant la roue d'appui (21) agit sur l'axe de palier (23).
